# EUROPÄISCHE PATENTANMELDUNG

(11) **EP 0 950 817 A2**
(43) Veröffentlichungstag der Anmeldung: **20.10.1999**
(21) Anmeldenummer: 99105210.1
(22) Anmeldetag: 13.03.1999
(51) Int. Cl.: F16B 7/04

(54) **Winkelverbindungselement**

(30) Priorität: 14.04.1998 DE 29806711 U
(71) Anmelder: fischerwerke Artur Fischer GmbH & Co. KG, 72178 Waldachtal (DE)
(72) Erfinder: Schulte, Helmut, 58507 Lüdenscheid (DE)

(57) **Zusammenfassung**

Die Erfindung betrifft ein Winkelverbindungselement (10) für ein aus Schienen (30, 32) zusammengesetztes Gestell. Um vielseitige Anbringungsmöglichkeiten für die Schienen (30, 32) zu schaffen, schlägt die Erfindung vor, das Winkelverbindungselement (10) mit einer als ebener Winkel ausgebildeten Grundplatte (12) auszubilden, von deren Innenrand (18, 20) zwei Seitenwände (22, 24) rechtwinklig abstehen.

## Beschreibung

Die Erfindung betrifft ein Winkelverbindungselement für ein aus Schienen zusammengesetztes Gestell mit den Merkmalen des Oberbegriffs des Anspruchs 1.

Ein derartiges Winkelverbindungselement ist bekannt. Das bekannte Winkelverbindungselement weist eine rechteckige Grundplatte von in etwa der Breite der zusammenzusetzenden Schienen auf, von deren einem Längsseitenrand eine Seitenwand rechtwinklig absteht. Die Seitenwand erstreckt sich über ungefähr die Hälfte der Länge der Grundplatte und ist ungefähr in der Mitte der Grundplatte zu einer seitlich abstehenden Lasche abgewinkelt. Die Lasche steht in einem rechten Winkel sowohl zur Grundplatte als auch zur Seitenwand. Das Winkelverbindungselement ist mit drei Durchstecklöchern versehen, die Verbindungseinrichtungen zum Anbringen der Schienen bilden. Zwei der Durchstecklöcher sind in der Grundplatte mit Abstand von deren beiden Stirnenden, das dritte Durchsteckloch ist in der Lasche angebracht.

Das bekannte Winkelverbindungselement dient zum Verbinden zweier rechtwinklig zueinander angeordneter Schienen im sog. T-Stoß, es wird also ein Stirnende einer Schiene mit einer an diesem Stirnende rechtwinklig angeordneten, durchgehenden anderen Schiene verbunden. Die Schienen sind üblicherweise Rechteckrohre mit einem in Längsrichtung durchgehenden Schienenschlitz in einer Schlitzwand der Schiene. Zur Verbindung wird in die Schiene eine Scheibenmutter eingelegt, die die Schlitzwand seitlich des Schienenschlitzes hintergreift und in die eine durch eines der Durchstecklöcher des Winkelverbindungselements durchgesteckte Schraube eingeschraubt und fest angezogen ist. Eine der dem Schienenschlitz gegenüberliegende, nachfolgend als Lochwand bezeichnete Schienenwand kann mit Durchstecklöchern versehen sein, die zur Verbindung mit dem Winkelverbindungselement oder auch zur Anbringung der Schiene an beispielsweise einer Wand oder Decke dienen können.

Der Erfindung liegt die Aufgabe zugrunde, ein Winkelverbindungselement der eingangs genannten Art so weiterzubilden, daß es vielfältigere Verbindungsmöglichkeiten bietet.

Diese Aufgabe wird erfindungsgemäß durch die Merkmale des Anspruchs 1 gelöst. Die Grundplatte des erfindungsgemäßen Winkelverbindungselements ist als ebener Winkel ausgebildet. Eben bedeutet, daß sich die beiden Schenke des Winkels in einer Ebene befinden, es steht also der eine Schenkel seitlich vom anderen Schenke ab. Der Winkel weist einen Innenrand mit zwei Abschnitten auf, die in einem der Grundplatte entsprechenden Winkel zueinander verlaufen. Von jedem der beiden Abschnitte des Innenrandes der Grundplatte stehen Seitenwände in einem Winkel zur Grundplatte ab. Die Seitenwände sind also in einem der Grundplatte entsprechenden Winkel zueinander angeordnet. Die Grundplatte weist Verbindungseinrichtungen zum Anbringen zweier Schienen in einem der Grundplatte entsprechenden Winkel auf. Ebenso weisen die Seitenwände Verbindungseinrichtungen zum Anbringen jeweils einer Schiene auf.

Das erfindungsgemäße Winkelverbindungselement hat zunächst den Vorteil, daß es die Verbindung zweier in einem Winkel zueinander angeordnete Schienen nicht nur im T-Stoß ermöglicht, sondern auch wenn beide Schienen ein Eck bilden und an der Verbindungsstelle enden. Das erfindungsgemäße Winkelverbindungselement ermöglicht eine solche Eckverbindung, ohne daß eine der Schienen oder das Winkelverbindungselement über die Verbindungsstelle überstehen. Weiterer Vorteil des erfindungsgemäßen Winkelverbindungselements ist, daß jede der beiden zu verbindenden Schienen mit ihrem Schienenschlitz an der Grundplatte oder einer Seitenwand, also in zwei um die Längsrichtung der Schiene gedrehten Stellungen am Winkelverbindungselement anbringbar sind. Ist die Bodenwand der Schienen mit Durchstecklöchern versehen, ist die Anbringung am Winkelverbindungselement in zwei weiteren um die Längsrichtung der Schiene gedrehten Positionen, insgesamt also in vier unterschiedlichen, um die Längsrichtung gedrehten Positionen möglich. Die Schienenschlitze jeder der beiden Schienen können also der jeweils anderen Schiene zugewandt, abgewandt oder auch seitlich in beiden Richtungen angeordnet sein. Zusätzlicher Vorteil der Verbindung ist, daß die Grundplatte und die Seitenwände des Winkelverbindungselements die zu verbindenden Schienen durch deren Anlage an der Grundplatte und den Seitenwänden in deren Winkelausrichtung zueinander Halt und dadurch den verbundenen Schienen eine Winkelsteifigkeit geben.

Zur Versteifung der Grundplatte weist das Winkelverbindungselement bei einer Ausgestaltung der Erfindung eine Verstärkung beispielsweise in Form einer Rippe oder einer Sicke auf. Diese Verstärkung versteift die Grundplatte gegen ein Verbiegen oder Knicken senkrecht zur Ebene der Grundplatte und gibt dem Winkelverbindungselement insbesondere dann eine hohe Steifigkeit, wenn die Seitenwände nicht unmittelbar, sondern ausschließlich mittelbar über die Grundplatte miteinander verbunden sind.

Als Verbindungseinrichtungen sieht die Erfindung Durchstecklöcher vor, die ein Durchstecken von Schrauben und ein Verschrauben der miteinander zu verbindenden Schienen mit dem Winkelverbindungselement ermöglichen.

In bevorzugter Ausgestaltung ist das Winkelverbindungselement einstückig ausgebildet. Insbesondere ist es als Blechstanz- und Biegeteil hergestellt, was eine kostengünstige und schnelle Herstellung ermöglicht.

Vorzugsweise ist das erfindungsgemäße Winkelverbindungselement zur Verbindung zweier Schienen in rechtwinkliger Anordnung zueinander vorgesehen, die Grundplatte des Winkelverbindungselement ist aus diesem Grund als rechtwinkliger Winkel ausgebildet, von dem die beiden Seitenwände rechtwinklig abstehen.

Die Erfindung wird nachfolgend anhand eines in der Zeichnung dargestellten Ausführungsbeispiels näher erläutert. Es zeigen:
- Figur 1: ein erfindungsgemäßes Winkelverbindungselement in perspektivischer Darstellung; und
- Figur 2: die Verbindung zweier Schienen mit dem Winkelverbindungsstück aus Figur 1 in kleinerer Darstellung.

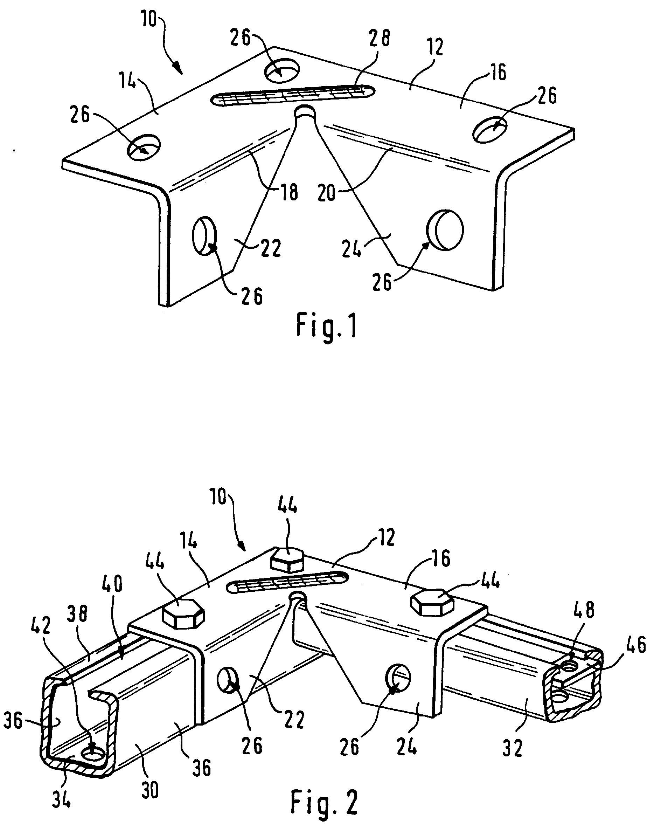

Das in Figur 1 dargestellte, erfindungsgemäße Winkelverbindungsstück 10 ist einstückig als Blechstanz- und Biegeteil hergestellt. Es weist eine ebene Grundplatte 12 auf, die in der Draufsicht einen Winkel bildet. Die beiden Schenke 14, 16 der einen Winkel bildenden Grundplatte 12 befinden sich in einer Ebene, der eine Schenke 14 steht von einer Seite des anderen Schenkels 16 ab. Die Grundplatte 12 weist einen Innenrand 18, 20 auf, der zwei gerade Abschnitte 18, 20 aufweist, die in einem rechten Winkel zueinander verlaufen.

Von beiden Abschnitten 18, 20 stehen Seitenwände 22, 24 ab, die einstückig mit der Grundplatte 12 sind. Die Seitenwände 22, 24 sind am Innenrand 18, 20 der Grundplatte 12 rechtwinklig zur Grundplatte 12 abgekantet. Die beiden Seitenwände 22, 24 sind rechtwinklig zueinander angeordnet.

Das Winkelverbindungselement 10 ist mit insgesamt fünf Durchstecklöchern 26 versehen, von denen drei in der Grundplatte 12 und je eines in jeder Seitenwand 22, 24 angebracht sind. In der Grundplatte 12 sind zwei der Durchstecklöcher 26 mit Abstand von den Enden der Schenkel 14, 16 und ein drittes Durchsteckloch 26 im Scheitelbereich angebracht.

Zur Versteifung ist die Grundplatte 12 mit einer diagonal von Schenke 14 zu Schenke 16 verlaufenden Sicke 28 versehen, die eine Verstärkung der Grundplatte 12 gegen Knicken bildet.

Figur 2 zeigt die Verbindung zweier rechtwinklig zueinander angeordneter Schienen 30, 32 mit dem erfindungsgemäßen Winkelverbindungsstück 10. Die Schienen 30, 32 sind Teil eines im übrigen nicht dargestellten Gestells, das aus mehreren derartigen Schienen zusammengesetzt ist. Die Schienen 30, 32 können beispielsweise auch an einer Wand oder Decke angebracht sein. Die beiden Schienen 30, 32 bilden eine Ecke, sie enden beide, wobei die eine Schiene 32 mit ihrem Stirnende stumpf gegen eine Seite der anderen Schiene 30 stößt und die andere Schiene 30 mit ihrem Stirnende im wesentlichen bündig mit einer Außenseite der einen Schiene 32 abschließt. Auch das Winkelverbindungselement 10 ist im wesentlichen bündig mit den Schienen 30, 32 und steht insbesondere außen nicht über die Schienen 30, 32 über.

Die Schienen 30, 32 sind Rechteckrohre mit einem Boden 34, zwei Seitenwänden 36 und einer dem Boden 34 gegenüberliegenden Schlitzwand 38, die mit einem in Längsrichtung der Schienen 30, 32 durchgehenden Schienenschlitz 40 versehen ist. Im dargestellten Ausführungsbeispiel weisen die beiden Schienen 30, 32 eine unterschiedliche Höhe auf. Der Boden 34 der Schienen 30 ist mit Durchstecklöchern 42 versehen, die in einer Linie in Längsrichtung der Schienen 30, 32 und mit Abstand voneinander im Boden 34 angebracht sind. Der Boden wird deswegen auch als Lochwand 34 bezeichnet.

Im dargestellten Ausführungsbeispiel liegen die beiden Schienen 30, 32 mit ihren Schlitzwänden 38 an jeweils einem Schenke 14,16 der Grundplatte 12 des Winkelverbindungselements 10 an. Je eine Seitenwand 36 der Schienen 30, 32 liegt an einer Seitenwand 22, 24 des Winkelverbindungselements 10 an. Zur Verbindung miteinander sind die beiden Schienen 30, 32 mit dem Winkelverbindungselement 10 verschraubt. Zu diesem Zweck sind drei Schrauben 44 durch die drei Durchstecklöcher 26 in der Grundplatte 12 des Winkelverbindungselements 10 durchgesteckt. Diese Schrauben 44 durchgreifen mit ihrem in der Zeichnung nicht sichtbaren Schraubenschaft die Schienenschlitze 40 der Schienen 30, 32 und sind in Scheibenmuttern 46 eingeschraubt, welche in die Schienen 30, 32 eingeführt sind. Zur Verdeutlichung ist beispielhaft eine derartige Scheibenmutter 46 im gebrochen dargestellten Ende der in Figur 2 rechten Schiene 32 dargestellt. Die Scheibenmutter 46 ist als rechteckige Scheibe mit einem Innengewinde 48 in ihrer Mitte ausgebildet. Die Scheibenmutter 46 hat eine Länge, die wenig kürzer als eine Innenbreite der Schiene 32 ist. Die Scheibenmutter 46 ist etwas schmaler als der Schienenschlitz 40. Die Scheibenmutter 46 hintergreift die mit dem Schienenschlitz 40 versehene Schlitzwand 38 der Schiene 32 und ermöglicht dadurch ein Festspannen der Schrauben 44 in den Schienen 30, 32. Die Scheibenmuttern 46 können von einem Stirnende her in die Schienen 30, 32 eingeführt werden. Sie können allerdings auch in Längsrichtung des Schienenschlitzes 40 ausgerichtet durch diesen in die Schienen 30, 32 eingebracht und durch Drehung um 90° in die dargestellte, die Schienenwand 38 hintergreifende Stellung gebracht werden.

Abweichend vom dargestellten Ausführungsbeispiel können die Schienen 30, 32 um 90° um ihre Längsrichtung gedreht mit ihrer Schlitzwand 38 an den Seitenwänden 22, 24 des Winkelverbindungselements 10 anliegend angeordnet werden. Die Verschraubung erfolgt in diesem Fall durch die Durchstecklöcher 26 der Seitenwände 22, 24 hindurch. Die Durchstecklöcher 42 in den Lochwänden 34 der Schienen 30, 32 ermöglichen es auch, die Lochwände 34 der Schienen 30, 32 mit den Seitenwänden 22, 24 oder mit der Grundplatte 12 des Winkelverbindungselements 10 zu verschrauben, so daß jede der beiden Schienen 30, 32 in insgesamt vier Positionen, in denen die Schienen 30, 32 jeweils um 90° um ihre Längsrichtung gedreht angeordnet sind, mit dem Winkelverbindungselement 10 verschraubt werden kann.

## Patentansprüche

1. Winkelverbindungselement für ein aus Schienen zusammengesetztes Gestell, mit einer Grundplatte, von deren einem Seitenrand eine erste Seitenwand in einem Winkel zur Grundplatte absteht, **dadurch gekennzeichnet**, daß die Grundplatte (12) als in einer Ebene liegender Winkel ausgebildet ist, daß die erste Seitenwand (22) von einem geraden, ersten Abschnitt (18) eines Innenrandes (18, 20) der Grundplatte (12) absteht, daß das Winkelverbindungselement (10) eine zweite Seitenwand (24) aufweist, die von einem in einem Winkel zum ersten Abschnitt (18) des Innenrandes (18, 20) der Grundplatte (12) verlaufenden zweiten Abschnitt (20) des Innenrandes (18, 20) der Grundplatte (12) und in einem Winkel zur Grundplatte (12) von der Grundplatte (12) absteht, und daß das Winkelverbindungselement (10) Verbindungseinrichtungen (26) zum Anbringen von Schienen (30, 32) an der Grundplatte (12) und an beiden Seitenwänden (22, 24) aufweist, wobei die Verbindungseinrichtungen (26) der Grundplatte (12) das Anbringen zweier Schienen (30, 32) in einem Winkel zueinander an der Grundplatte (12) und die Verbindungseinrichtungen (26) der Seitenwände (22, 24) das Anbringen einer Schiene (30, 32) an jeder Seitenwand (22, 24) ermöglichen.

2. Winkelverbindungselement nach Anspruch 1, **dadurch gekennzeichnet**, daß das Winkelverbindungselement (10) eine die Grundplatte (12) in einer Ebene versteifende Verstärkung (28) aufweist.

3. Winkelverbindungselement nach Anspruch 1, **dadurch gekennzeichnet**, daß die Verbindungseinrichtungen Durchstecklöcher (26) sind.

4. Winkelverbindungselement nach Anspruch 1, **dadurch gekennzeichnet**, daß das Winkelverbindungselement (10) einstückig ist.

5. Winkelverbindungselement nach Anspruch 4, **dadurch gekennzeichnet**, daß das Winkelverbindungselement (10) ein Blechstanz- und Biegeteil ist.

6. Winkelverbindungselement nach Anspruch 1, **dadurch gekennzeichnet**, daß die Grundplatte (12) als rechtwinkliger Winkel ausgebildet ist.

7. Winkelverbindungselement nach Anspruch 1, **dadurch gekennzeichnet**, daß die erste und/oder die zweite Seitenwand (22, 24) rechtwinklig von der Grundplatte (12) absteht.
